# FASCICULE DE BREVET EUROPEEN

(11) **EP 3 017 987 B1**
(45) Date de publication et mention de la délivrance du brevet: **29.04.2020**
(21) Numéro de dépôt: 15185795.0
(22) Date de dépôt: 18.09.2015
(51) Int. Cl.: F16H 3/54, B60K 6/48, B60K 6/54, B60K 6/365

(54) **DISPOSITIF DE TRACTION HYBRIDE DE VÉHICULE AUTOMOBILE ET MÉCANISME DE TRANSMISSION DE PUISSANCE**
HYBRIDE ZUGVORRICHTUNG EINES KRAFTFAHRZEUGS, UND LEISTUNGSÜBERTRAGUNGSMECHANISMUS
HYBRID DRIVE DEVICE OF A MOTOR VEHICLE AND POWER TRANSMISSION MECHANISM

(30) Priorité: 06.11.2014 FR 1460704
(43) Date de publication de la demande: 11.05.2016
(73) Titulaire: Renault S.A.S., 92100 Boulogne-Billancourt (FR)
(72) Inventeur: RAOUL, Michel, 78990 Elancourt (FR)

(56) Documents cités:
- WO-A1-2013/007886
- WO-A1-2014/032961
- DE-A1-102012 007 622
- DE-A1-102012 016 990
- DE-A1-102012 024 677
- US-A1- 2011 179 890

## Description

L'invention concerne un dispositif de traction hybride pour véhicule automobile comportant un moteur thermique avec sa boîte de vitesses manuelle ou robotisée, et une machine électrique connectée à la boîte de vitesses.

Plus précisément, elle a pour objet un mécanisme de transmission selon la revendication 1.

Dans les véhicules hybrides, comportant une double motorisation, thermique et électrique, la machine électrique est parfois liée au moteur thermique sur sa face dite « accessoires », comme l'alternateur. Mais, pour augmenter la puissance électrique installée, l'efficacité des échanges d'énergie de stockage en batterie et de restitution, et ouvrir ces véhicules à des possibilités nouvelles, en particulier le roulage en mode électrique, il apparait préférable de connecter la machine électrique à la boîte de vitesses.

On connait des groupes motopropulseurs hybrides, dont la machine électrique est connectée à l'un ou à l'autre des arbres de la boîte de vitesses.

La publication DE 10 2012 220 970 A1 décrit un mécanisme de transmission de puissance et la publication WO 2014/032961 décrit un dispositif de traction hybride.

La publication FR 2 772 675 décrit notamment un groupe motopropulseur comportant un moteur thermique, une boîte de vitesses, et une machine électrique. La machine électrique peut être connectée à l'un ou l'autre des arbres de la boîte de vitesses, selon plusieurs modes de réalisation. Dans tous les cas, la liaison entre la machine électrique et l'arbre de la boîte est un rapport unique fixe, et cette liaison comporte un dispositif de crabotage. La liaison est par pignon ou par chaîne. Le dispositif de crabotage est agencé sur l'axe de la machine électrique ou sur l'axe de l'arbre de la boîte. Selon la liaison entre la machine électrique et la boîte, les possibilités offertes sont différentes.

Lorsqu'elle est liée avec l'arbre primaire, la machine électrique bénéficie des rapports de réduction de la boîte, mais elle perturbe l'inertie et la trainée équivalente de celui-ci. Pour que cette perturbation soit supportée par les dispositifs de synchronisation, il est nécessaire d'automatiser les changements de rapport. Ainsi, le superviseur pilote la machine électrique pendant les changements de rapport, et limite ou supprime les effets indésirables d'inertie et de traînée. Dans certains cas, la machine électrique peut réaliser à elle seule la synchronisation, et les synchroniseurs classiques sont supprimés. Toutefois, cette architecture présente l'inconvénient suivant : comme la machine électrique est découplée des roues pendant le changement de rapport, elle ne peut pas assurer la continuité d'accélération complète, ou partielle, qui permettrait d'améliorer la prestation de passage des vitesses d'une boîte de vitesses robotisée.

En revanche, lorsqu'elle est liée avec l'arbre secondaire, la machine électrique est capable de restituer de l'énergie en permanence, y-compris pendant les changements de rapports. Mais elle ne bénéficie pas des démultiplications de la boîte de vitesses. Pour augmenter la puissance échangeable, il est alors nécessaire d'introduire une démultiplication élevée entre la machine électrique et l'arbre secondaire. Au-delà d'une certaine vitesse du véhicule, cela devient un inconvénient, car la vitesse de rotation de la machine est excessive, et son rendement devient médiocre.

Pour découpler la machine électrique de la transmission, il est possible d'introduire un dispositif de dé-crabotage comme celui qui est proposé dans la publication FR 2 772 675. Mais, même dans ce cas, la machine reste peu efficace sur une certaine plage d'utilisation du véhicule, car elle tourne trop vite.

Pour pallier cet inconvénient, la présente invention propose d'agencer un mécanisme de transmission de puissance à deux rapports, entre la machine électrique et l'arbre secondaire de la boîte de vitesses.

Elle propose également un mécanisme de transmission comprenant un réducteur de vitesse à deux rapports, relié mécaniquement avec l'arbre secondaire de la boîte de vitesses.

La machine électrique peut ainsi disposer d'un rapport de démultiplication court pour être très efficace au cours des déplacements lents du véhicule, et d'un rapport long pour rester opérante sur une plage de vitesses raisonnable de la machine, lors des déplacements rapides du véhicule.

Selon une autre caractéristique, le mécanisme de transmission est composé de deux éléments : le premier est un réducteur de vitesse, et le second est un lien mécanique avec l'arbre secondaire de la boîte.

Selon une autre caractéristique, le premier élément du dispositif de transmission est un train épicycloïdal. La machine électrique est connectée de manière permanente au planétaire, et la couronne, est aussi connectée de manière permanente au second élément du dispositif de transmission.

Selon une autre caractéristique, le second élément du dispositif de transmission est constitué d'une chaîne et de deux pignons. Le premier est lié à la couronne du train épicycloïdal, et le second à l'arbre secondaire.

Selon une autre caractéristique, le train planétaire donne trois états au dispositif de transmission. En effet, grâce à un manchon coulissant, le porte-satellites peut être connecté à une roue dentée fixée sur le carter du dispositif pour donner le rapport de transmission court. Il peut être connecté à la couronne pour donner le rapport de transmission long de valeur un. Enfin, il peut être libre pour déconnecter la machine électrique.

Selon d'autres caractéristiques :
Le planétaire et le premier pignon de chaîne sont guidés radialement et maintenus axialement par un unique roulement à bille (possible car dans un train épicycloïdal, tous les efforts radiaux se neutralisent). Le pignon de sortie de chaîne est guidé par l'excroissance cannelée de l'arbre secondaire, et tenu axialement par des butées à aiguilles ou une rondelle de friction adaptée.

Le manchon coulissant de changement d'état est positionné par un dispositif électromécanique composé d'une fourchette munie de deux branches et d'une excroissance filetée constituant un écrou, et d'un axe fileté engagé dans cet écrou, qui est entraîné par un moteur électrique piloté par une unité centrale de gestion.

La chaîne possède un moyen de tension mécanique composé de deux patins, supporté par deux bras articulés autour d'un axe commun. Les bras et les patins sont mutuellement repoussés par un ressort pré chargé. Si la machine électrique est tantôt motrice, tantôt génératrice, le brin tendu de la chaîne et son bras détendu s'inversent selon le mode de fonctionnement. Avec le système de tension proposé, le brin inactif est toujours tendu par son patin qui prend appui sur le brin tendu par l'intermédiaire du ressort.

L'ensemble du dispositif est supporté par une platine, et contenu dans un carter qui constitue un ensemble étanche possédant son propre lubrifiant.

La présente invention sera mieux comprise à la lecture de la description suivante d'un mode de réalisation non limitatif de celle-ci, en se reportant aux dessins annexés, sur lesquels :
- la figure 1 est une vue en coupe longitudinale du dispositif complet, en position rapport court engagé, avec la machine électrique et l'extrémité de la boîte de vitesses,
- la figure 2 est une vue en coupe longitudinale du dispositif complet seul, en position neutre,
- la figure 3 est une vue en coupe longitudinale du dispositif complet seul, en position rapport long, et
- la figure 4 est une vue en coupe transversale du dispositif en représentation partielle.

**Nomenclature :**

| Repères | |
|---|---|
| 100 | Mécanisme de transmission de puissance |
| 101 | Platine support de mécanisme de transmission de puissance électrique |
| 101,a | Pré-centrage du pignon 155 |
| 102 | Carter du mécanisme de transmission de puissance électrique |
| 110 | Train épicycloïdal |
| 111 | Manchon support de planétaire |
| 112 | Planétaire |
| 113 | Anneau d'arrêt planétaire |
| 114 | Roulement support du manchon de planétaire |
| 115 | Clip arrêt roulement |
| 116 | Plaque d'arrêt du roulement 114 |
| 116,a | Clabot de blocage du porte satellite |
| 117 | Vis de maintien de la plaque 115 |
| 118 | Joint d'étanchéité du manchon 111 |
| 119 | Porte-satellite |
| 119,a | Crabot du porte satellite |
| 120 | Satellite |
| 121 | Aiguilles sous satellite |
| 122 | Rondelle de friction satellite |
| 123 | Butées de porte satellite à aiguilles |
| 124 | Rondelle appui aiguilles |
| 125 | Cloche de train planétaire |
| 126 | Couronne |
| 127 | Clabot de blocage du train |
| 128 | Anneau d'arrêt du crabot 127 |
| 150 | Pignon d'entrée de chaîne |
| 151 | Roulement support du pignon 150 |
| 152 | Coupelle de maintien du roulement 150 |
| 153 | Vis maintien coupelle 152 |
| 154 | Chaîne |
| 155 | Pignon de sortie de chaîne |
| 155,a | Excroissance moyeu pour pré centrage |
| 156 | Obturateur sur pignon de chaîne 155 |
| 157 | Butée à aiguilles maintien axial du pignon 150 |
| 158 | Joint étanchéité |
| 170 | Baladeur de clabotage |
| 171 | Fourchette de commande clabot |
| 172 | Axe de fourchette |
| 173 | Bague de guidage fourchette |
| 174 | Axe vis de commande fourchette |
| 175 | Bague de guidage vis |
| 176 | Rondelle appui vis |
| 177 | Joint étanchéité axe vis |
| 178 | Moteur de commande clabotage |
| 180 | Axe du tendeur |
| 181 | Bras articulé |
| 182 | Axe de patin |
| 183 | patin |
| 184 | ressort |
| 200 | Boîte de vitesses |
| 201 | Carter des mécanismes |
| 202 | Arbre primaire |
| 203 | Arbre secondaire |
| 203,a | Embout cannelée de l'arbre secondaire |
| 204 | Joint étanchéité boîte |
| 300 | Machine électrique moteur - générateur. |

### Description :

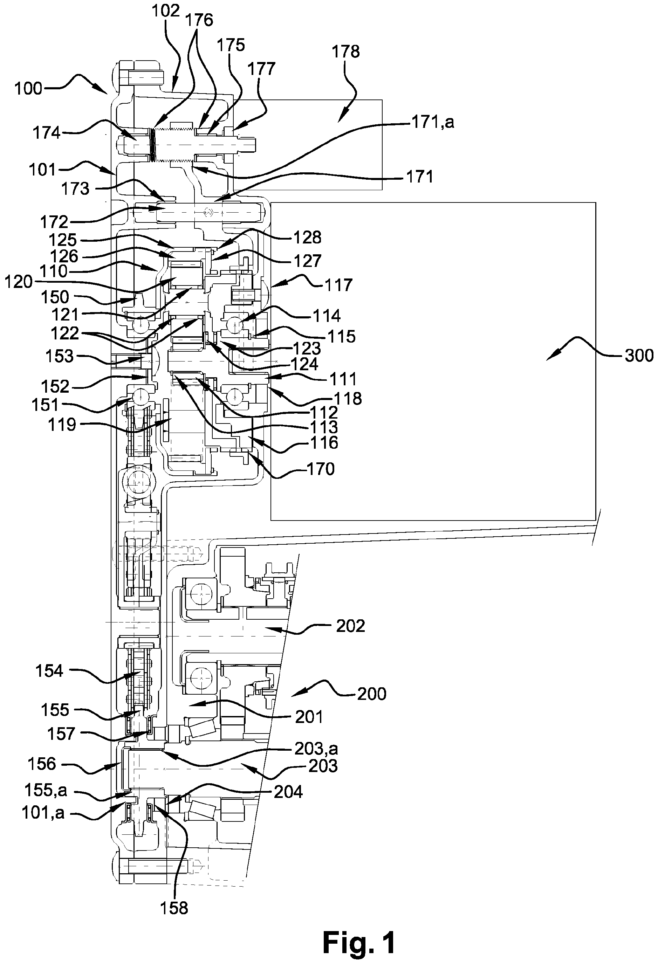

Sur la figure 1, on a représenté en coupe longitudinale, un mode de réalisation du dispositif de traction hybride complet. L'hybridation de la boîte consiste à connecter à cette dernière une machine électrique par une liaison mécanique. Cette connexion présente deux niveaux : le premier est un réducteur de vitesses à deux rapports par l'utilisation d'un train épicycloïdal et le second est une simple transmission par chaîne. Le dispositif de traction hybride pour véhicule automobile décrit sur les figures, comporte une boîte de vitesses à arbres parallèles 200 dont un arbre primaire 202 transmet la puissance d'un moteur thermique d'entraînement à un arbre secondaire 203 relié aux roues du véhicule, et une machine électrique 300 transmettant sa puissance à l'arbre secondaire de la boîte 200.

Le mécanisme de transmission de puissance 100 est un mécanisme décrabotable 100 à deux rapports, entre la machine électrique 300 et l'arbre 203 de la boîte de vitesses, qui est relié mécaniquement avec cet arbre. Il comprend une enceinte composée d'une platine de support des mécanismes 101, et d'un carter de fermeture 102. L'ensemble du mécanisme est supporté par la platine 101, et contenu dans le carter 102, qui constitue un ensemble étanche possédant son propre lubrifiant.

Il comporte un réducteur de vitesses, constitué par un train épicycloïdal simple 110, muni d'un planétaire 112 rapporté sur de cannelures sur un manchon support 111, qui est couplé en permanence avec la machine électrique 300, par exemple par une liaison cannelée. Le manchon 111 est supporté par un roulement à billes 114 centré dans le carter 102. Il est retenu et maintenu axialement par une plaque d'arrêt 116 qui présente une cannelure 116,a sur sa périphérie extérieure. Le manchon 111 supporte le planétaire 112 du train. Il est monté sur des cannelures, et retenu par l'anneau d'arrêt 113. Un joint dynamique d'étanchéité 118 du mécanisme de transmission 100 vers la machine électrique 300, est installé entre le manchon 111 et le carter 102. Le manchon 111 supporte également le porte-satellites 119. Sans assurer réellement son centrage, il limite son débattement axial par l'intermédiaire des butées à aiguilles 123, et lui offre un maintien axial par l'intermédiaire de la rondelle d'appui 124 contre le planétaire 112. Le porte-satellites 119 supporte trois satellites 120 guidés sur des aiguilles 121, et maintenus axialement par les rondelles de friction 122. Le dernier élément du train est la couronne 126, qui est centrée et entraînée en rotation par des excroissances régulières de la cloche du train planétaire 125. La cloche 125 supporte aussi un clabot 127 de blocage de train, qui est lié à la cloche 125 de la même manière que la couronne. La cloche et le clabot sont retenus axialement par l'anneau d'arrêt 128.

La machine électrique 300 est connectée de manière permanente au planétaire 112 du train épicycloïdal, dont la couronne 126 est reliée mécaniquement à l'arbre secondaire 203 de la boîte. La seconde partie du mécanisme de transmission est composée principalement d'une chaîne 154, installée entre un pignon d'entrée 150, lié à la cloche 125 du train planétaire 110, et un pignon de sortie 155, porté par l'arbre secondaire 203 de la boîte de vitesses 200. La transmission mécanique entre le train épicycloïdal et l'arbre secondaire 203, est assurée par la chaîne 154, qui tourne autour des deux pignons 150, 155, dont le premier est lié à la couronne 126 et le second à l'arbre secondaire 203.

Le pignon d'entrée 150 est guidé sur la platine 101 par le roulement à billes 151. Il est maintenu axialement par la coupelle 152 et la vis 153. Le planétaire 112 et le premier pignon, ou pignon d'entrée de chaîne 155, sont guidés radialement et maintenus axialement par cet unique roulement à bille 151. Avant le montage du mécanisme proposé sur la boîte, le pignon de sortie de chaîne 155 est pré centré par son moyeu 155,a sur le nez 101,a de la platine101. Il est guidé par une excroissance cannelée 203,a de l'arbre secondaire, et tenu axialement par des butées à aiguilles 157, ou en variante, par une rondelle de friction adaptée.

Le pignon 155 possède en périphérie des dents d'engrènement avec la chaîne. Il assure l'étanchéité du mécanisme, du côté de sa liaison avec la boîte de vitesses 100, grâce à son obturateur 156, et à sa portée pour le joint dynamique 158, monté dans le carter 102. Ce pignon est maintenu axialement par deux butées à aiguilles 157, qui le prennent en sandwich entre la platine 101 et le carter 102. Pour fonctionner correctement, la chaîne nécessite une tension suffisante pour limiter la bruyance et l'usure.

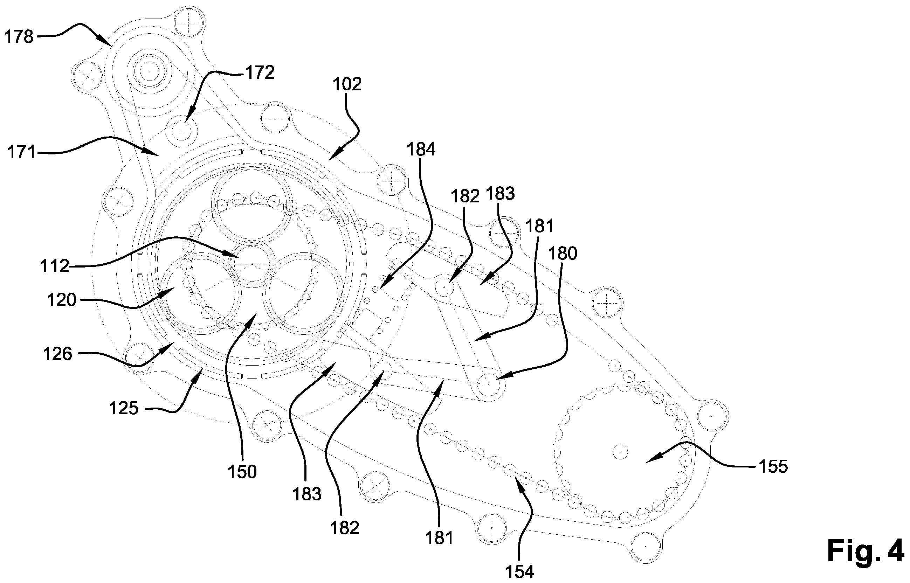

La machine électrique pouvant être motrice et réceptrice, la chaîne doit pouvoir travailler en « tiré » et en « poussé ». Les deux brins doivent pouvoir être tendus. Un mécanisme de tension mécanique autonome est installé à cet effet entre les deux brins. Il est constitué (voir figure 4) d'un axe 180 dans la platine 101, de deux bras 181 supportant chacun un patin 183, articulé sur un axe 182. Les deux patins sont repoussés mutuellement contre les brins de la chaîne 154, par le ressort 184. Ce système est contenu dans une enceinte étanche composée d'une platine 101 et d'un carter 102.

La boîte 200 partiellement représentée sur la figure 1 comprend un carter de mécanisme 201, un arbre primaire 202, un arbre secondaire 203. Ce dernier présente une excroissance cannelée 203,a, dépassant à l'extrémité du carter et accueillant le pignon de sortie 155 du dispositif d'hybridation.

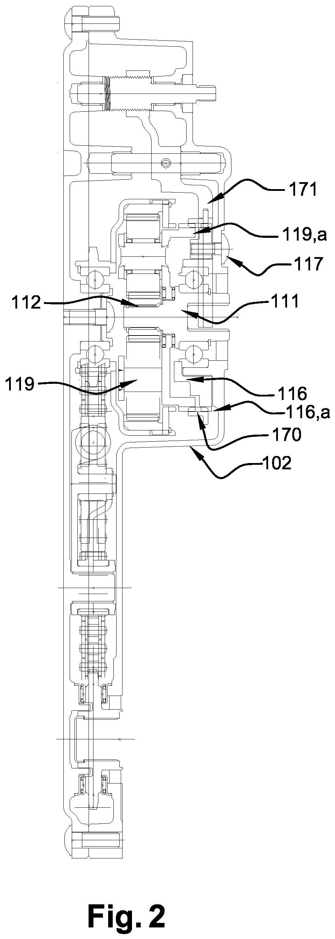

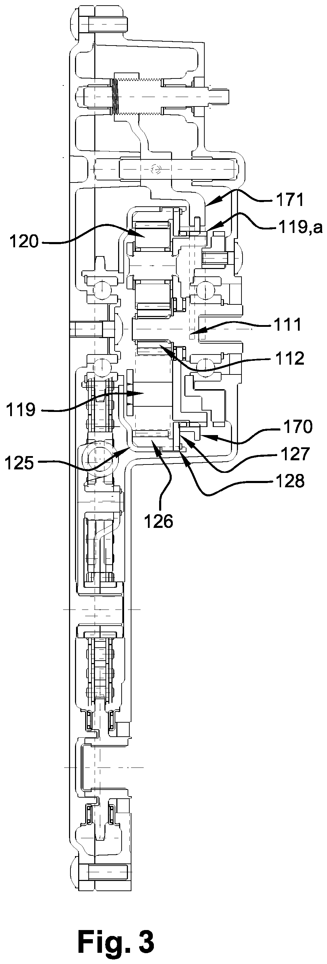

Le mécanisme de transmission 100 est à deux rapports. Comme indiqué plus haut, le train épicycloïdal possède un porte-satellites 119, possédant en périphérie une couronne une cannelure 119,a, et une rondelle clabot 127 liée à la couronne 126 du train par l'intermédiaire de la cloche 125. La plaque d'arrêt 116 du roulement supporte en périphérie un clabot de blocage 116,a. Lorsque les cannelures 119,a du porte-satellites et le clabot de blocage 116,a sont liés, et le porte-satellites est bloqué à l'arrêt. Cette position est illustrée par la figure 1. Elle réalise une réduction de vitesses (ou multiplication de couple) par le train, dans le rapport du nombre des dents du planétaire 112 et de la couronne 126. Le dispositif de transmission est sur son rapport court. Lorsque les cannelures 119,a et le clabot 127 sont liés, et le porte-satellites 119 et la couronne 126 sont liés. Dans cette position, illustrée par la figure 3, l'ensemble du train tourne à la même vitesse. Le rapport de démultiplication est de un. C'est le rapport long du dispositif. Dans une situation intermédiaire, illustrée par la figure 2, le porte-satellites n'est lié ni à la couronne, 126 ni à la plaque d'arrêt 116. Il est libre en rotation, de sorte que la machine électrique est alors découplée du GMP. Le dispositif est en position neutre. En résumé, le train épicycloïdal présente un rapport court sur lequel son porte-satellites 119 est immobilisé vis-à-vis d'un carter 102 et un rapport long, où il tourne en bloc, et une position une position neutre, où le mécanisme est déconnecté de la machine électrique 300.

Un dispositif de commande est prévu pour réaliser ces changements de rapports. Il est constitué d'un baladeur 170 actionné par un moteur auxiliaire 178. Le baladeur 170 se présente sous la forme d'un manchon coulissant sur les cannelures 119,a du porte-satellites 119 entre une position de rapport court où il immobilise le porte-satellites 119 par crabotage sur les dents 116,a d'une plaque d'arrêt 116 fixée au carter 102 et une position de rapport long où il lie en rotation le porte-satellites 119 à la couronne 126, en passant par une position intermédiaire, libre par rapport à ces deux éléments, où le mécanisme de transmission 100 est déconnecté de la machine électrique 300. Entre ces deux positions, il passe par le neutre.

Le baladeur 170 est entouré partiellement par la fourchette de commande 171, portée par un axe 172, qui est guidé dans la platine de support 101 et dans le carter 102 par des bagues 173. Le manchon coulissant 170 est actionné par la fourchette 171. Celle-ci porte un bras d'actionnement, lui-même déplacé par une tige filetée, qui est animée par le moteur électrique piloté 178.

La fourchette 171 présente une excroissance 171,a avec un alésage fileté, qui coopère avec un axe 174 entraîné par le moteur 178. L'axe 174 est fileté dans sa partie centrale, et guidé dans la platine de support 101,e sur le carter 102. Il est arrêté axialement contre ces deux éléments par les rondelles de friction 176. L'axe 174 traverse le carter 102. Le joint 177 réalise une étanchéité. Le moteur 187 assure le déplacement du baladeur entre ses trois positions.

La figure 4 met en évidence le moyen de tension mécanique de la chaîne, qui est composé de deux patins 183 supportés par deux bras articulés 181 autour d'un axe commun 180, et mutuellement repoussés par un ressort pré-chargé 184. En fonctionnement, l'un des brins de la chaîne se tend, tandis que l'autre se détend. Lorsque la machine électrique passe d'un fonctionnement « en motrice » à un fonctionnement « en génératrice », le brin tendu et le brin détendu s'inversent. Grâce au système de tension proposé, le brin de chaîne détendu est toujours retendu par son patin qui prend appui sur le brin tendu par l'intermédiaire du ressort 184.

## Revendications

1. Mécanisme de transmission de puissance décrabotable à deux rapports (100) entre une machine électrique (300) et un arbre secondaire (203) de boîte de vitesses, mécanisme composé d'un train épicycloïdal (110) à deux rapports muni d'un planétaire (112), d'un porte-satellites (119) supportant plusieurs satellites (120) et d'une couronne (126), **caractérisé en ce que** le planétaire (112) est connecté de manière permanente à la machine électrique (300) et **en ce que** la couronne (126) est reliée mécaniquement à l'arbre secondaire (203) de la boîte de vitesses.

2. Mécanisme de transmission de puissance (100) selon la revendication 1, **caractérisé en ce que** la liaison mécanique entre le train épicycloïdal et l'arbre secondaire (203) est assurée par une chaîne (154) tournant autour de deux pignons (150, 155), dont le premier est lié à la couronne (126) du train épicycloïdal et le second à l'arbre secondaire (203).

3. Mécanisme de transmission de puissance (100) selon la revendication 1 ou 2, **caractérisé en ce qu'**il présente un manchon (170) coulissant sur les cannelures (119,a) du porte-satellites (119) entre une position de rapport court où il immobilise le porte-satellites (119) par crabotage sur les dents 116,a d'une plaque d'arrêt (116) fixée au carter (102) et une position de rapport long où il lie en rotation le porte-satellites 119 à la couronne (126), en passant par une position intermédiaire, libre par rapport à ces deux éléments, où le mécanisme de transmission (100) est déconnecté de la machine électrique (300).

4. Mécanisme de transmission de puissance (100) selon la revendication 5, **caractérisé en ce que** le manchon coulissant (170) est actionné par une fourchette (171) de commande portant un bras déplacé par une tige filetée qui est animée par un moteur électrique piloté (178).

5. Mécanisme de transmission de puissance (100) selon la revendication 2, 3 ou 4, **caractérisé en ce que** la chaîne (154) présente une cloche (125), la cloche (125), la couronne (126), et le premier pignon (150) de la chaîne (154) étant guidés radialement et maintenus axialement par un unique roulement à billes (151).

6. Mécanisme de transmission de puissance (100) selon l'une des revendications 2 à 5, **caractérisé en ce que** le pignon de sortie de chaîne (155) est guidé par une excroissance cannelée (203,a) de l'arbre secondaire et tenu axialement par des butées à aiguilles (157) ou par une rondelle de friction adaptée.

7. Mécanisme de transmission de puissance (100) selon l'une des revendications 2 à 6, **caractérisé en ce que** la chaîne (154) possède un moyen de tension mécanique composé de deux patins (183) supporté par deux bras articulés (181) autour d'un axe commun (180) et mutuellement repoussés par un ressort préchargé (184).

8. Mécanisme de transmission de puissance (100) selon l'une des revendications 2 à 7, **caractérisé en ce qu'**il est supporté par une platine (101) et contenu dans un carter (102) qui constitue un ensemble étanche possédant son propre lubrifiant.

9. Dispositif de traction hybride pour véhicule automobile comportant une boîte de vitesses à arbres parallèles (200) dont un arbre primaire (202) transmet la puissance d'un moteur thermique d'entraînement à un arbre secondaire (203) relié aux roues du véhicule, une machine électrique (300) transmettant sa puissance à l'arbre secondaire de la boîte (200), et un mécanisme de transmission de puissance (100) agencé entre la machine électrique (300) et l'arbre secondaire (2013) de la boîte de vitesses selon l'une des revendications 1 à 8.

10. Dispositif de traction hybride selon la revendication 8, **caractérisé en ce que** le train épicycloïdal (110) présente un rapport court sur lequel son porte-satellites (119) est immobilisé vis-à-vis d'un carter (102), et un rapport long, où il tourne en bloc.

11. Dispositif de traction hybride selon la revendication 10, **caractérisé en ce qu'**il présente un manchon (170) coulissant sur les cannelures (119,a) du porte-satellites (119) entre une position de rapport court où il immobilise le porte-satellites (119) par crabotage sur les dents (116,a) d'une plaque d'arrêt (116) fixée au carter (102) et une position de rapport long où il lie en rotation le porte-satellites (119) à la couronne (126), en passant par une position intermédiaire, libre par rapport à ces deux éléments, où le mécanisme de transmission (100) est déconnecté de la machine électrique (300).

## Patentansprüche

1. Entkuppelbarer Leistungsübertragungsmechanismus mit zwei Übersetzungsverhältnissen (100) zwischen einer elektrischen Maschine (300) und einer Sekundärwelle (203) eines Getriebes, wobei der Mechanismus aus einem Planetengetriebe (110) mit zwei Übersetzungsverhältnissen besteht, das über ein Sonnenrad (112), einen Planetenradträger (119), der mehrere Planetenräder (120) trägt, und ein Hohlrad (126) verfügt, **dadurch gekennzeichnet, dass** das Sonnenrad (112) dauerhaft mit der elektrischen Maschine (300) verbunden ist und dass das Hohlrad (126) mit der Sekundärwelle (203) des Getriebes mechanisch gekoppelt ist.

2. Leistungsübertragungsmechanismus (100) nach Anspruch 1, **dadurch gekennzeichnet, dass** die mechanische Verbindung zwischen dem Planetengetriebe und der Sekundärwelle (203) durch eine Kette (154) sichergestellt wird, die sich um zwei Ritzel (150, 155) dreht, von denen das erste mit dem Hohlrad (126) des Planetengetriebes und das zweite mit der Sekundärwelle (203) verbunden ist.

3. Leistungsübertragungsmechanismus (100) nach Anspruch 1 oder 2, **dadurch gekennzeichnet, dass** er eine Muffe (170) aufweist, die sich auf den Nuten (119,a) des Planetenradträgers (119) zwischen einer Position mit kurzem Übersetzungsverhältnis, in der sie den Planetenradträger (119) durch Kuppeln an den Zähnen (116,a) einer Anschlagplatte (116), die am Gehäuse (102) befestigt ist, blockiert, und einer Position mit langem Übersetzungsverhältnis, in der sie den Planetenradträger (119) drehbar mit dem Hohlrad (126) verbindet, verschieben kann, wobei sie eine Zwischenposition passiert, die in Bezug auf diese zwei Elemente frei ist, in der der Übertragungsmechanismus (100) von der elektrischen Maschine (300) getrennt ist.

4. Leistungsübertragungsmechanismus (100) nach Anspruch 5, **dadurch gekennzeichnet, dass** die Schiebemuffe (170) durch eine Schaltgabel (171) betätigt wird, die einen Arm trägt, der durch eine Gewindestange, die durch einen gesteuerten Elektromotor (178) angetrieben wird, bewegt wird.

5. Leistungsübertragungsmechanismus (100) nach Anspruch 2, 3 oder 4, **dadurch gekennzeichnet, dass** die Kette (154) eine Glocke (125) aufweist, wobei die Glocke (125), das Hohlrad (126) und das erste Ritzel (150) der Kette (154) durch ein einziges Kugellager (151) radial geführt und axial gestützt werden.

6. Leistungsübertragungsmechanismus (100) nach einem der Ansprüche 2 bis 5, **dadurch gekennzeichnet, dass** das Kettenabgangsritzel (155) durch einen mit Nuten versehenen Vorsprung (203,a) der Sekundärwelle geführt und durch Nadellager (157) oder durch eine angepasste Reibscheibe axial gehalten wird.

7. Leistungsübertragungsmechanismus (100) nach einem der Ansprüche 2 bis 6, **dadurch gekennzeichnet, dass** die Kette (154) ein Mittel zum mechanischen Spannen, das aus zwei Kufen (183) besteht, besitzt, die durch zwei Gelenkarme (181) um eine gemeinsame Achse (180) getragen werden, und die durch eine vorgespannte Feder (184) auseinander geschoben werden.

8. Leistungsübertragungsmechanismus (100) nach einem der Ansprüche 2 bis 7, **dadurch gekennzeichnet, dass** er durch eine Platte (101) getragen wird und in einem Gehäuse (102) enthalten ist, das eine dichte Einheit bildet, die ihr eigenes Schmiermittel besitzt.

9. Hybride Zugvorrichtung für ein Kraftfahrzeug, die Folgendes umfasst: ein Getriebe mit parallelen Wellen (200), wobei eine Primärwelle (202) die Leistung eines Antriebsverbrennungsmotors auf eine Sekundärwelle (203), die mit den Rädern des Fahrzeugs gekoppelt ist, überträgt, eine elektrische Maschine (300), die ihre Leistung auf die Sekundärwelle des Getriebes (200) überträgt, und einen Leistungsübertragungsmechanismus (100), der zwischen der elektrischen Maschine (300) und der Sekundärwelle (2013) des Getriebes angeordnet ist, nach einem der Ansprüche 1 bis 8.

10. Hybride Zugvorrichtung nach Anspruch 8, **dadurch gekennzeichnet, dass** das Planetengetriebe (110) ein kurzes Übersetzungsverhältnis, bei dem sein Planetenradträger (119) gegenüber einem Gehäuse (102) blockiert ist, und ein langes Übersetzungsverhältnis, bei dem es als Ganzes dreht, aufweist.

11. Hybride Zugvorrichtung nach Anspruch 10, **dadurch gekennzeichnet, dass** sie eine Muffe (170) aufweist, die sich auf den Nuten (119,a) des Planetenradträgers (119) zwischen einer Position mit kurzem Übersetzungsverhältnis, in der sie den Planetenradträger (119) durch Kuppeln an den Zähnen (116,a) einer Anschlagplatte (116), die am Gehäuse (102) befestigt ist, blockiert, und einer Position mit langem Übersetzungsverhältnis, in der sie den Planetenradträger (119) drehbar mit dem Hohlrad (126) verbindet, verschieben kann, wobei sie eine Zwischenposition passiert, die in Bezug auf diese zwei Elemente frei ist, in der der Übertragungsmechanismus (100) von der elektrischen Maschine (300) getrennt ist.

## Claims

1. Disengageable two-ratio power transmission mechanism (100) transmitting power between an electric machine (300) and a secondary shaft (203) of a gear box, which mechanism is made up of a two-ratio epicyclic gear set (110) equipped with a sun gear (112), with a planet carrier (119) supporting several planet pinions (120) and of an annulus gear (126), **characterized in that** the sun gear (112) is permanently connected to the electric machine (300) and **in that** the annulus gear (126) is mechanically connected to the secondary shaft (203) of the gear box.

2. Power transmission mechanism (100) according to Claim 1, **characterized in that** the mechanical connection between the epicyclic gear set and the secondary shaft (203) is provided by a chain (154) rotating around two sprockets (150, 155) of which the first is connected to the annulus gear (126) of the epicyclic gear set and the second to the secondary shaft (203).

3. Power transmission mechanism (100) according to Claim 1 or 2, **characterized in that** it has a sleeve (170) sliding on the splines (119,a) of the planet carrier (119) between a short-ratio position in which it immobilizes the planet carrier (119) by coupling of a dog clutch with the teeth (116,a) of a stop plate (116) fixed to the casing (102) and a long-ratio position in which it rotationally connects the planet carrier (119) to the annulus gear (126), passing via an intermediate position, free with respect to these two elements, in which the transmission mechanism (100) is disconnected from the electric machine (300).

4. Power transmission mechanism (100) according to Claim 5, **characterized in that** the sliding sleeve (170) is actuated by a control fork (171) bearing an arm that is moved by a threaded rod which is driven by a controlled electric motor (178).

5. Power transmission mechanism (100) according to Claim 2, 3 or 4, **characterized in that** the chain (154) has a bell housing (125), the bell housing (125), the annulus gear (126) and the first sprocket (150) of the chain (154) being guided radially and held axially by one single ball bearing (151).

6. Power transmission mechanism (100) according to one of Claims 2 to 5, **characterized in that** the chain output sprocket (155) is guided by a splined extension (203,a) of the secondary shaft and held axially by needle thrust bearings (157) or by a suitable friction washer.

7. Power transmission mechanism (100) according to one of Claims 2 to 6, **characterized in that** the chain (154) has a mechanical tensioning means made up of two shoes (183) supported by two arms (181) articulated about a common axis (180) and pushed apart by a preloaded spring (184) .

8. Power transmission mechanism (100) according to one of Claims 2 to 7, **characterized in that** it is supported by a mounting plate (101) and contained inside a casing (102) which constitutes a sealed entity having its own lubricant.

9. Hybrid drive device for a motor vehicle comprising a parallel-shafts gear box (200) in which a primary shaft (202) transmits the power of a driving combustion engine to a secondary shaft (203) connected to the wheels of the vehicle, an electric machine (300) transmitting its power to the secondary shaft of the gear box (200), and a power transmission mechanism (100) arranged between the electric machine (300) and the secondary shaft (2013) of the gear box according to one of Claims 1 to 8.

10. Hybrid drive device according to Claim 8, **characterized in that** the epicyclic gear set (110) has a short ratio in which its planet carrier (119) is immobilized with respect to a casing (102), and a long ratio in which they rotate as one.

11. Hybrid drive device according to Claim 10, **characterized in that** it has a sleeve (170) sliding on the splines (119,a) of the planet carrier (119) between a short-ratio position in which it immobilizes the planet carrier (119) by coupling of a dog clutch with the teeth (116,a) of a stop plate (116) fixed to the casing (102) and a long-ratio position in which it rotationally connects the planet carrier (119) to the annulus gear (126), passing via an intermediate position, free with respect to these two elements, in which the transmission mechanism (100) is disconnected from the electric machine (300) .
